# EUROPEAN PATENT APPLICATION

(11) **EP 2 108 564 A1**
(43) Date of publication of application: **14.10.2009**
(21) Application number: 09166721.2
(22) Date of filing: 20.07.2007
(51) Int. Cl.: B62B 3/06, B62B 3/12, B62D 49/06, A61G 7/08

(54) **Lift truck**

(30) Priority: 28.07.2006 IT BO20060570
(62) Divisional of application: 07112815.1
(71) Applicant: Vire S.r.l., 48018 Faenza (RA) (IT); Formula Servizi Società Cooperativa, 47100 Forli (IT)
(72) Inventor: Oltrecolli, Maurizio, 48010 Cotignola, RA (IT); Cavini, Renzo, 48018 Faenza, RA (IT); Rinaldini, Graziano, 47034 Forlimpopoli, FO (IT)
(74) Representative: Modiano, Micaela Nadia

(57) **Abstract**

A lift truck (1) of the type which comprises a chassis (2) which rests on at least three wheels (3a, 3b, 3c), a platform (4) which can perform a vertical translational motion with respect to the chassis (2), and at least one respective element for moving one of the wheels (3a, 3b, 3c). At least one wheel (3c) is free and arranged proximate to an end of the chassis (2), and two wheels (3a, 3b) are each controlled by a respective independent motor element (5a, 5b) and are mutually parallel and proximate to each other. The platform (4) lies above the motorized wheels (3a, 3b).

## Description

The present invention relates to a lift truck which has particular mobility and versatility.

The need to transport goods and/or various items (including furniture) over short distances has made it necessary to use devices known as lift trucks or more generally as transpallets.

The term "pallet" in fact designates a particular platform, generally made of wood, which has particular openings which are suitable for mating with the front forks of lift trucks.

The limitation of lift trucks is that they require relatively large maneuvering spaces, due to the fact that their steered wheel is arranged at one end of the truck: the minimum turning radius that can be provided by a traditional truck is equal to the center distance between the steered wheel and the fixed free wheels (arranged at the opposite end of the truck): this minimum turning radius is obtained only by arranging the steered wheel so that its direction of motion is at 90° with respect to the free wheels, leading to an obvious poor maneuverability of the vehicle.

In practice, the length of the truck often coincides with the minimum turning radius that can be provided during maneuvers.

A field in which a lift truck finds an important and interesting application is the hospital and/or hospital-related field (rehabilitation centers, spas, health care centers, homes, et cetera): in such cases it is in fact necessary to move the beds, often with the patients on them, while passing through narrow corridors and furnished rooms.

Hospital beds usually have supporting wheels to allow their easy movement: in particular, the wheels are all casters and can be locked in order to ensure maximum ease of use.

To move the beds, the standard practice is to assign two people (one at the bedhead and the other one generally at the opposite end) who guide the bed along the path that it must follow. In this manner, maneuvering problems are minimized (all the wheels are casters), but the operating costs are extremely high, since two people are required for every movement.

Of course, these problems occur in a similar manner, and are solved by the present invention, whenever it is necessary to transport pieces of furniture provided with wheels (office furniture, exhibition furnishings, et cetera) in spaces which have tight maneuvering spaces.

The aim of the present invention is to provide a lift truck with a tight turning radius and with high maneuverability.

Within this aim, an object of the present invention is to provide a lift truck with a variable turning radius.

Another object of the present invention is to provide a lift truck which is flexible in terms of use, since it is adapted to be used with different load supporting structures and therefore is not necessarily integrated with the element that needs to be transported.

Another object of the present invention is to provide a lift truck which is suitable for transporting beds and other pieces of furniture, optionally provided with wheels, and is adapted to work with small maneuvering spaces.

Another object of the present invention is to provide a lift truck which has a low cost and is relatively simple to provide in practice and safe in application.

This aim and these and other objects which will become better apparent hereinafter are achieved by the present lift truck as defined in claim 1.

Further characteristics and advantages of the invention will become better apparent from the following detailed description of a preferred but not exclusive embodiment of a lift truck, illustrated by way of non-limiting example in the accompanying drawings, wherein:

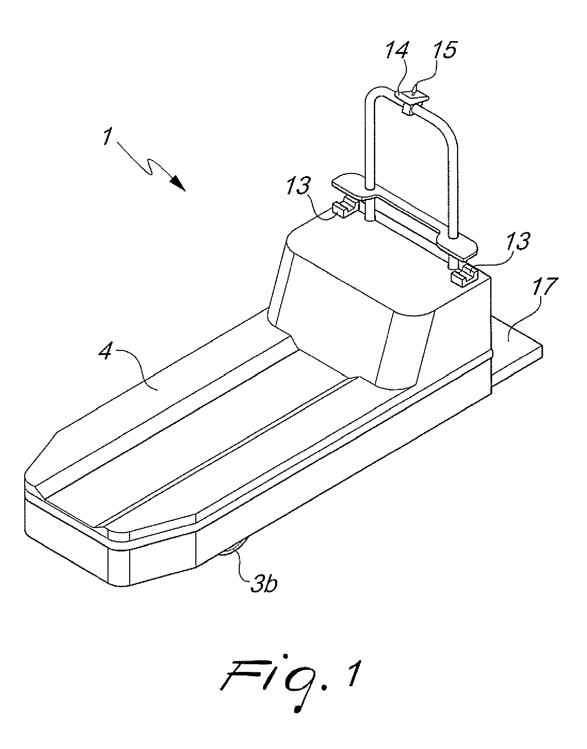

Figure 1 is a perspective view of a lift truck according to the invention;

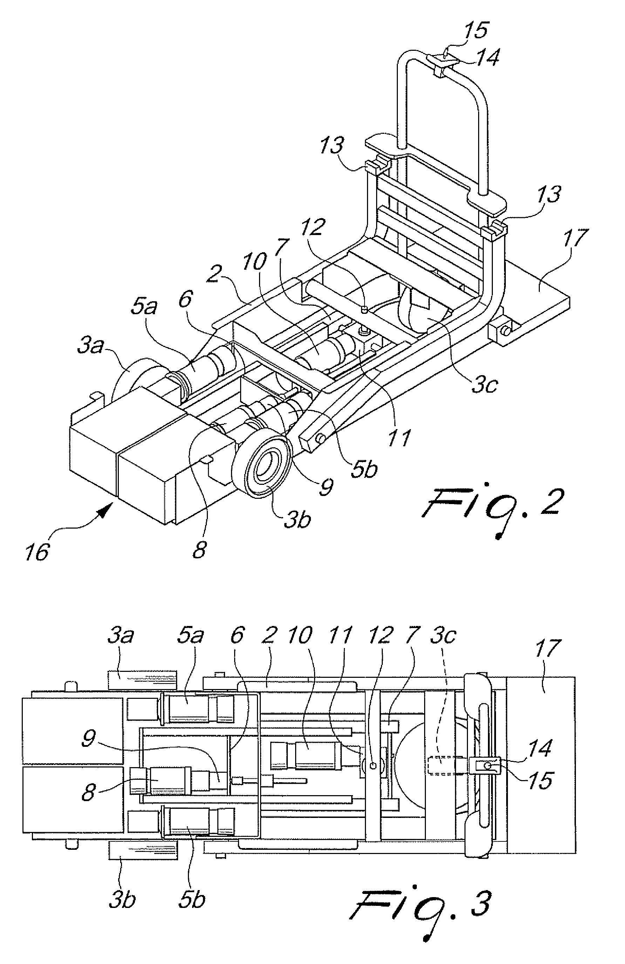

Figure 2 is a perspective view of the lift truck according to the invention, without the external housings for covering and protection;
Figure 3 is a top view of the lift truck according to the invention, without the external housings for covering and protection.

With reference to the figures, the reference numeral 1 generally designates a lift truck.

The truck 1 comprises a chassis 2 which rests on wheels 3a, 3b and 3c (in the embodiment shown in the figures, the wheels are three, but they might also be more than three in order to ensure greater stability of the entire truck 1) and a platform 4 which can perform a vertical translational motion with respect to the chassis 2.

The wheel 3c is free and is arranged proximate to an end of the chassis 2, while the other two wheels 3a and 3b are each controlled by a respective independent motor element 5a and 5b.

In particular, the wheels 3a and 3b are parallel and proximate to each other at the sides of the chassis 2: according to the embodiment shown in the figures, the wheels 3a and 3b are surmounted by the platform 4.

The motorized wheels 3a and 3b and the respective motor elements 5a and 5b are stably associated with a slider 6, which is engaged slidingly in appropriately provided guiding abutments 7 of the chassis 2: the abutments 7 and the stroke of the slider 6 are mutually parallel and longitudinal with respect to the direction of the extension of the truck 1. A motor 8 and respective motion transmission means 9 (gears, speed reduction units, and the like) are mounted on the chassis 2 in functional association with the slider 6, for its controlled longitudinal translational motion along the guiding abutments 7.

The vertically translating platform 4 is moved by means of an appropriate electric motor 10, on which a suitable actuator 11 is keyed; according to a particular embodiment, the actuator 11 can be provided as an element which is designed to convert the rotary motion of the motor shaft into a translational motion of a shaft 12 with which the platform 4 is associated. According to a particular embodiment (not shown in the figures), the platform can be arranged exclusively proximate to the end of the chassis 2 that comprises the free wheel 3c: in this case, the platform 4 is extremely small and comprises support and engagement elements which are stably associable with one or more mutually different structures designed to carry the load, for example with tubular elements, even of different sizes, which are typical of bedheads.

According to the embodiment shown in the figures (which is more generic), the platform 4 runs along the entire surface of the truck 1 and has suitable support and engagement elements 13 proximate to the end of the chassis 2 that comprises the free wheel 3c.

According to an application of particular interest in practice and in application, the support and engagement elements 13 can be associated with a portion of the head of a hospital bed: in this case, the truck 1 can be used to move the bed rigidly coupled to the engagement elements 13.

The operator, after coupling the bed to the elements 13, can in fact transport the bed by using the propulsion action of the truck 1.

In order to optimize ease of use, the truck 1 comprises a control and management unit 14, which is designed to control the motors 5a, 5b, 8 and 10: the unit 14 is provided with respective levers 15 for controlling motion (in particular handling forward travel, backward travel and the stopping of all the motors 5a, 5b, 8 and 10) and the direction of motion (in particular defining the speed of each of the motors 5a and 5b, determining the leftward and rightward direction of the motion of the truck 1). The independent motorization of the wheels 3a and 3b in fact ensures that their rotation at different speeds (or even in mutually opposite directions) is converted into rotations of the truck 1, in an extreme case even in place (the two wheels 3a and 3b turn in opposite directions and determine the center of rotation at the midpoint of their center distance).

In the more general case, a steering maneuver of the vehicle is obtained by making the two driving wheels move with speeds which are parallel in their direction, have matching or opposite orientations, and have a different absolute value; the turning radius and the momentary center of rotation of the vehicle are determined by the value of the rotation rate of the individual wheels. The control system of the vehicle, provided with a control logic unit, is capable of calculating and optimizing motion as a function of the received command and of the application.

Further, the variation of the position of the axis of the wheels 3a and 3b, which can be optionally controlled by the control unit 14 (and can be obtained by means of the translational motion of the slider 7 on the abutments 7 by way of the action of the respective motor 8) allows to arrange said axis in the most convenient position to ensure that the loaded truck 1 can turn in place even in very tight spaces.

According to embodiments of particular practical interest, the control unit 14 can comprise a first assembly, which is rigidly coupled to the chassis 2 and is provided with a signal receiver, and a second portable assembly, which is provided with the control levers 15 and is equipped with a signal transmitter which is associated with the receiver: in this manner, the truck could be controlled remotely, with the advantage of eliminating the space occupied by the operator and facilitating the execution of maneuvers in particularly tight spaces.

For the operation and power supply of its components, the truck 1 comprises a battery assembly 16: in the embodiment shown in the figures, the assembly 16 is arranged in a cantilever fashion in the portion beyond the motorized wheels 3a and 3b in order to use their weight to give grip to the wheels 3a and 3b and stability to the entire truck 1. As an alternative, it is possible to provide suitable stabilizing counterweights, not shown in the figures.

In order to comply with applicable statutory provisions regarding safety, the truck 1 can comprise acoustic and luminous motion indicators: these accessories are particularly important in all environments in which there are also uninformed people in addition to operators (for example hospitals).

To facilitate use by the operator, the truck 1 can also comprise an end ledge 17 for accommodating the operator.

It has thus been shown that the invention achieves the intended aim and objects.

The invention thus conceived is susceptible of numerous modifications and variations, all of which are within the scope of the appended claims.

All the details may further be replaced with other technically equivalent ones.

In the exemplary embodiments shown, individual characteristics, given in relation to specific examples, may actually be interchanged with other different characteristics that exist in other exemplary embodiments.

Moreover, it is noted that anything found to be already known during the patenting process is understood not to be claimed and to be the subject of a disclaimer.

In practice, the materials used, as well as the shapes and dimensions, may be any according to requirements without thereby abandoning the scope of the protection of the appended claims.

The disclosures in Italian Patent Application No. BO2006A000570 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A lift truck of the type which comprises a chassis (2) which rests on at least three wheels (3a, 3b, 3c), a platform (4) which can perform a vertical translational motion with respect to said chassis (2), and at least one respective element for moving one of said wheels (3a, 3b, 3c), at least one of said wheels (3c) being free and arranged proximate to an end of said chassis (2) and two of said wheels (3a, 3b) being each controlled by a respective independent motor element (5a, 5b) and being mutually parallel and proximate to each other, said platform (4) lying above said motorized wheels (3a, 3b), **characterized in that** said vertically movable platform (4) is arranged proximate to the end of said chassis (2) which comprises the at least one said free wheel (3c), said platform (4) being provided with support and engagement elements (13).

2. The truck according to claim 1, **characterized in that** the platform (4) runs along the entire surface of the truck (1) and has said support and engagement elements (13) proximate to the end of the chassis (2) that comprises the at least one free wheel (3c).

3. The truck according to claim 2, **characterized in that** said support and engagement elements (13) are associable with a portion of the head of a hospital bed, said truck (1) being adapted to move said bed which is rigidly coupled to said engagement elements (13).
